(19) Europäisches Patentamt European Patent Office Office européen des brevets

(11) **EP 2 488 905 B1**

(12) **EUROPEAN PATENT SPECIFICATION**

(45) Date of publication and mention
of the grant of the patent:
**16.01.2019 Bulletin 2019/03**

(21) Application number: **10812985.9**

(22) Date of filing: **22.09.2010**

(51) Int Cl.:
*G02B 6/28* *(2006.01)*    *G02B 6/036* *(2006.01)*
*H01S 3/00* *(2006.01)*    *H01S 3/23* *(2006.01)*

(86) International application number:
**PCT/GB2010/051594**

(87) International publication number:
**WO 2011/048398 (28.04.2011 Gazette 2011/17)**

(54) **TAPERED COMBINER FOR LARGE CORE HIGH POWER FIBER LASERS**

KEGELFÖRMIGER KOMBINATOR FÜR GROSSKERNIGE HOCHLEISTUNGS-FASERLASER

SORTIE DE LASER À FIBRE ET PROCÉDÉ DE COMBINAISON DE SORTIES DE LASER À FIBRE

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**

(30) Priority: **14.10.2009 GB 0917938**

(43) Date of publication of application:
**22.08.2012 Bulletin 2012/34**

(73) Proprietor: **SPI Lasers UK Limited
Southampton SO30 2QU (GB)**

(72) Inventors:
• **LI, Cheng
  Southampton SO30 2QU (GB)**
• **LEWIS, Steffan
  Southampton SO30 2QU (GB)**
• **BOTHEROYD, Iain
  Southampton SO30 2QU (GB)**

(74) Representative: **Dolleymores
9 Rickmansworth Road
Watford, Hertfordshire WD18 0JU (GB)**

(56) References cited:
**EP-A2- 1 988 412     US-A1- 2010 189 138
US-A1- 2010 195 195**

## Description

This invention relates to the output from fibre laser sources and also to a method of combining the outputs from two or more fibre lasers.

Fibre lasers are becoming more and more common. In these, the active gain medium is a doped optical fibre. They can provide relatively high output powers, high optical quality, compact size, reliability and ease of delivery.

The outputs of individual fibre lasers can be combined to increase power by bundling two or more fibres together and coupling these fibres to a single output fibre. However, in combining the source fibres, there would generally be some reduction in the brightness of the beam, due to increased beam diameter and / or increased beam divergence.

More specifically, the combination of high-brightness fibres is limited by the relatively large cladding of these fibres. This restricts how closely the fibres can be packed. One potential solution is to use either smaller diameter fibres (or etch the fibres to remove all or part of the cladding). This solution is undesirable due to the practicalities of individually handling such small fibres. EP 1 988 412 A2 discloses an optical combiner for combining a signal input with pump laser radiation delivered by plural multi-mode fibres with a tapered section.

The present invention arose in an attempt to provide an improved combiner, and method of combining the outputs from two or more fibre lasers.

The object of the present invention is fulfilled by a method and a device as defined in independent claims 1,8. Preferred embodiments are defined in the dependent claims.

According to the present invention in a first aspect there is provided a method of forming a combiner for combining the output from two or more fibre laser sources, comprising providing two or more input fibres, each having a core and a pedestal; bundling the input fibres; tapering the input fibres such that the tapered fibre core diameter is less than the core diameter corresponding to the minimum mode-field diameter (MFD) value for that fibre core, and splicing the bundle of tapered fibres to an output fibre, wherein each fibre in the bundle of input fibres is from a separate fibre laser and these all connect to the single output fibre.

In this specification, the term 'strong tapering' hereinafter refers to a taper ratio such that the tapered fibre core diameter is less than $a_{min}$, where $a_{min}$ is the core diameter corresponding to the minimum MFD (Mode-Field Diameter) value for that fibre core.

The fibres may be strongly tapered before, after or during the bundling.

Each input fibre may comprise at least a core having a first refractive index, an outer core or pedestal having a second refractive index lower than the first refractive index and a cladding layer having a lower still refractive index whereby, when the MFD becomes large enough due to strong tapering as described above, laser light escaping from the core is captured and guided by the pedestal and so is confined within a limited region of the fibre.

The tapering is performed in an adiabatic manner, wherein increased beam diameter is matched by an equivalent reduction in beam divergence. This allows for the output beam to have a reduced divergence compared with the input beam and thus minimises the reduction in brightness introduced by the combiner. This offers a further advantage over the smaller fibre / etched approach described above.

There may be seven fibres in the input bundle in one embodiment, a central fibre surrounded by six outer fibres, although other embodiments may include any other number of fibres.

The bundle of fibres may be surrounded by an outer capillary that provides a means of handling and protecting the fibre bundle.

The pedestal that provides guiding of the light may itself be tapered further to provide further physical reduction in the diameter of the fibre(s) while still maintaining low-divergence of the light.

According to the present invention in a further aspect, there is provided an output combiner for combining the output from two or more fibre lasers to a single output, comprising a bundle of two or more input fibres, each having a pedestal and being tapered strongly as described above, and an output fibre spliced to the bundle of input fibres.

The input fibres may all be strongly tapered collectively prior to splicing to a single output fibre or alternatively the input fibres could each be tapered separately, assembled into a bundle and then spliced for connection to the output fibre.

Embodiments of the invention will now be described, by way of example only, with reference to the accompanying drawings, in which:

Figure 1 shows a cross-section through a triple-clad (pedestal-type) fibre;
Figure 2 shows relative refractive indices of the fibre of Figure 1;
Figures 3 to 5 show steps in the tapering of a fibre;
Figure 6 shows theoretical variation in mode-field diameter (MFD) when a typical fibre is tapered;
Figure 7 shows a cross-section of a strongly tapered fibre bundle;
Figure 8 shows a combiner; and
Figure 9 shows a cross-section of another strongly tapered fibre bundle.

In the following discussion the abbreviation "micron(s)" is used for the SI unit micrometer.

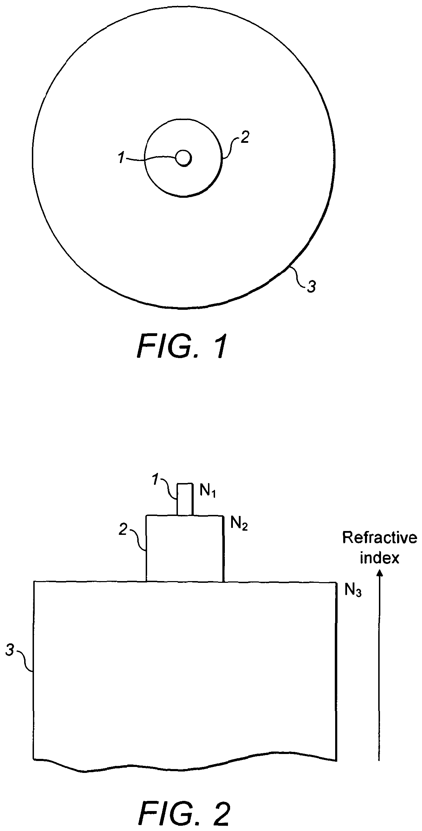

Figures 1 and 2 show a typical triple clad optical fibre, for reference. A triple clad (or 'pedestal') fibre comprises a core 1 of first refractive index N1, a pedestal 2 (or inner clad layer) of index N2 less than N1 and an outer cladding layer 3 of index N3 less than N2. Thus, the layer 2 forms a pedestal.

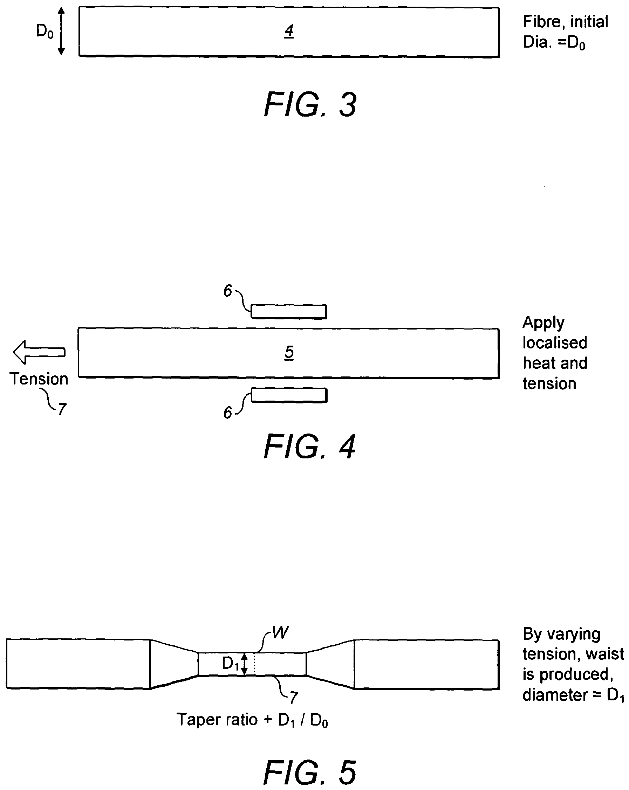

Tapering of optical fibres is quite common. Figures 3 to 5 show respective steps in a typical tapering operation. Figure 3 shows an optical fibre 4 having initial diameter (external diameter) $D_0$. In a first step, localised heat is applied to an area 5 via any appropriated heating means 6 whilst tension 7 is applied. The tension pulls upon the fibre while the heat is applied. By varying the tension a waist 7 is produced under the localised heat and this has a diameter $D_1$.

For subsequent use, the fibre might be cleaved at a waist W and this cleaved end can then be spliced to another output fibre, as appropriate.

A parameter, known as 'taper ratio' is equivalent to $D_1/D_0$. Thus, a taper ratio of 1 equals no tapering and a taper ratio of ½ relates to a tapering to half the original diameter, for example.

A parameter known as the mode-field diameter (MFD) describes the diameter of a propagating light beam within a fibre. For standard fibres, as the fibre is tapered, the MFD initially decreases. However, at a core diameter value $a_{min}$, the MFD values reaches a minimum. Further tapering of the core leads to a rapidly increasing MFD value. When the MFD value significantly exceeds the core diameter, light can escape from the core. Without a pedestal this would escape into the outer cladding - possibly exit from the fibre and / or be absorbed by external contamination. With a suitable pedestal it is captured by the pedestal.

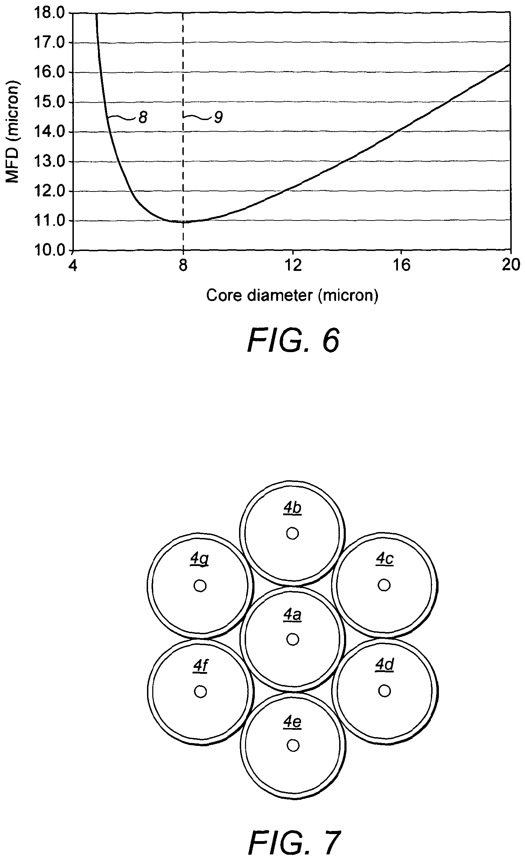

Figure 6 illustrates how the MFD (in microns) can vary with core diameter when a typical fibre is tapered. The fibre used to obtain these details is one which has an initial core diameter of 20 microns, a core numerical aperture of 0.08 and wavelength of light (laser light) is 1.08 microns. The plot 8 shows the variation of MFD with core diameter and the dashed line 9 relates to values where the MFD equals the core diameter. From an initial value of 16.2 microns (core diameter equals 20 microns; taper ratio equals 1) the MFD decreases slowly to a minimum of approximately 10.9 microns where the core diameter is $a_{min}$=8 microns and the taper ratio is 0.4 (before increasing more rapidly as the taper ratio/core diameter reduces further).

The term 'strong' tapering refers to a taper ratio corresponding to values where the core diameter is less than the core diameter ($a_{min}$) corresponding to the minimum value of MFD for that tapered fibre. That is, to a point on the curve 8 situated to the left-hand side of line 9. Thus, for a fibre of initial core diameter 20 microns this corresponds to the core diameter being less than 8 microns (ie a taper ratio of less than 0.4).

In preferred embodiments of the invention, input optical fibres are tapered in this 'strong' manner, ie values to the left of line 9 in the figure. Such strongly tapered fibres are used in embodiments of the invention.

In embodiments, bundles of fibres (or at least collections of two or more fibres), each fibre forming the output of a fibre laser, are used as input fibres to a combiner. The bundles of fibres are strongly tapered as described above, or in any ways. In a preferred embodiment, the 'strong' tapering is done to a bundle of input fibres collectively (ie all the fibres are bundled) and then tapered down and then the tapered bundle is spliced to a single output fibre as will be described further below. In an alternative embodiment, each individual fibre is tapered separately, all the tapered fibres are then assembled into a bundle and the bundle is then spliced to the single output fibre.

Note that the taper ratio D1/D0 shown in Figure 5 for examples describes the ratio of the final cladding to the initial cladding diameters. That is, a 400 micron diameter fibre tapered to a 200 micron one has a taper ratio of 0.5. For an untapered fibre, the taper ratio equals 1 of course. Note that the core and also the pedestal if present also reduce in diameter by the same ratio.

Figure 7 shows a cross-section of a strongly tapered fibre bundle comprising seven fibres, an inner fibre 4a and 6 outer fibres 4b to 4g.

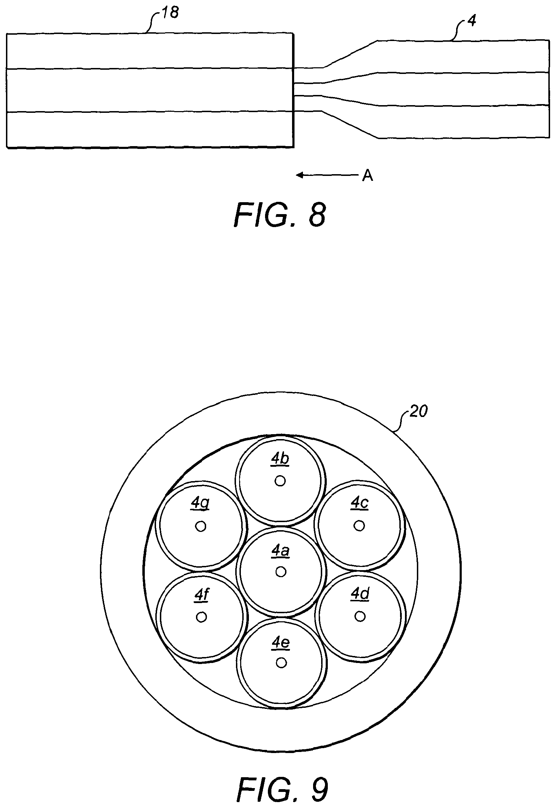

This bundle of fibres, whether formed by tapering individual fibres or by tapering the whole bundle, is cleaved and at the waist for example is spliced to an output fibre 18, as shown in Figure 8. Each fibre in the bundle of input fibres 4 is from a separate fibre laser and these all connect to the single output fibre 18. The laser beam therefore travels towards the left in the figure in the direction shown by arrow A.

The resulting combiner is found to minimise the reduction in brightness by the bundle of input fibres being strongly tapered and also by the use of the pedestal surrounding the first core in the fibres. In a typical example, the output fibre is of core diameter 90 microns and outer cladding diameter 400 microns, having core numerical aperture of 0.11. Each of the input fibres is of core diameter 9, pedestal diameter 105 and outer cladding diameter 125 microns having respective numerical apertures 0.09, 0.20 and 0.45 and tapered down to core diameter 1.8, pedestal diameter 21 and cladding diameter 25 micron.

Note that the fibres are tapered adiabatically. This means that the increased beam diameter is matched by an equivalent reduction in beam divergence. Adiabatic tapering is described in, for example, US 6,324,326 which describes how a single mode input can be preserved as it passes through a tapered region. The taper angle $\theta(z)$ should be sufficiently low to prevent power in the fundamental core mode (LP$_{01}$ transferring to the closest even core mode (LP$_{02}$).

$$\Theta(z) < \Theta_{T.max} = r.(\beta_{01} - \beta_{02})/2\pi$$

where r is the core radius and $\beta_{01}$, and $\beta_{01}$ are the propagation constant for LP$_{01}$ and LP$_{02}$ core modes respectively. In the present application, an object is to prevent

power in the $LP_{01}$ core mode (radius is r) transferring to the $LP_{02}$ pedestal mode (radius greater r). However, if a smaller value for the core radius applies, then the taper falls within the criteria for both core and pedestal and thus is classed as adiabatic.

Note that use of the pedestal provides an additional guiding structure that permits tapering well beyond the MFD minimum while maintaining low loss. This results in overall better brightness preservation.

A beam profile taken directly from a tapered input shows that the beam distributions fit very well with a Gaussian profile and is nearly single mode. The beam divergence is 0.05 rad. As described, the fibre specification in this embodiment is of diameter 9/105/125 NA 0.9/0.20/0.45 tapered down to a diameter of 1.8/21/25 micron.

In essence, a single mode beam in the core is completely coupled into the fundamental mode of the pedestal and remains single mode.

In an embodiment the diameter of the output fibre is 90/400 micron and numerical aperture 0.11/0.45. When this fibre is spliced to a tapered bundle of seven input fibres, the beam divergence from the output fibre is 0.066 rad, ie less than 0.07 rad (half angle) and this corresponds to a BPP (beam parameter product) of about 3mm.mrad (half-angle/radius). The distributions are again very nearly Gaussian. The loss of the device in this case is less than 0.15 dB in both low power and high power tests. The output in the example shown in Figure 10 is from the pedestal of an output fibre with seven input fibres. In this example the seven input fibres are bundled within a capillary having bore of approximately 380microns and outer diameter equal to 1.27mm. The capillary and fibres are then tapered to give a capillary outer diameter of 254 micron.

The beam in the input fibres are then transmitted into the single output fibre for onward delivery.

In some embodiments, it may be desirable to surround the bundle of fibres by an outer capillary. An example is shown in Figure 9. Outer capillary 20 serves to protect the fibre bundles and enables easier handling of it.

**Claims**

1. A method of forming a combiner for combining the output from two or more fibre laser sources, comprising providing two or more input fibres (4a-4g), each having a core (1) and a pedestal (2); bundling the input fibres; strongly tapering the input fibres such that the tapered fibre core diameter is less than the core diameter corresponding to the minimum mode-field diameter (MFD) value for that fibre core, and splicing the bundle of tapered fibres to an output fibre (18), wherein each fibre in the bundle of input fibres is from a separate fibre laser and these all connect to the core of the single output fibre (18);

**characterized in that**
the tapering is performed in an adiabatic manner, a single mode input in the core is preserved as it passes through the tapered region, and the taper angle is such that power in an LP01 core mode is prevented from transferring to an LP02 pedestal mode.

2. A method as claimed in Claim 1, wherein the fibres are strongly tapered before bundling.

3. A method as claimed in Claim 1, wherein the input fibres are bundled and collectively strongly tapered prior to splicing to the output fibre.

4. A method as claimed in any preceding claim, wherein each input fibre comprises at least a core (1) having a first refractive index, a pedestal (2) having a second refractive index lower than the first refractive index and a cladding layer (3) having a third refractive index lower than the second refractive index.

5. A method as claimed in any preceding claim, comprising bundling seven fibres (4a-4g) into the input bundle.

6. A method as claimed in any preceding claim, comprising cleaving the bundle of input fibres at a waist and splicing the cleaved bundle to the output fibre.

7. A method as claimed in any preceding claim, including a bundle of input fibres and an outer capillary radially surrounding the bundle.

8. An output combiner for combining the output from two or more fibre lasers to a single output, comprising a bundle of two or more input fibres (4), each having a core (1) and a pedestal (2) and being strongly tapered such that the core diameter is less than the core diameter corresponding to the minimum mode-field diameter (MFD) value for that fibre , and an output fibre (18) spliced to the bundle of input fibres, wherein each fibre in the bundle of input fibres is from a separate fibre laser and these all connect to the core of the single output fibre (18);

**characterized in that**
the tapering is performed in an adiabatic manner, a single mode input in the core is preserved as it passes through a tapered region, and the taper angle is such that power in an LP01 core mode is prevented from transferring to an LP02 pedestal mode.

9. An output combiner as claimed in Claim 8, wherein each input fibre comprises at least a core (1) having a first refractive index, a pedestal (2) having a second refractive index lower than the first refractive index and a cladding layer (3) having a third refractive index lower than the second refractive index.

10. An output combiner as claimed in Claim 8 or Claim 9, wherein the input fibres have respective core, pedestal and cladding diameters of 9/105/125 micrometer and respective numerical apertures of 0.09/0.2/0.5 and are tapered down to respective diameters of 1.8/21/25 micrometer.

11. An output combiner as claimed in any of Claims 8 to 10, wherein the output fibre has respective core and cladding diameters of 90 and 400 micrometer and numerical apertures 0.11 and 0.45.

12. An output combiner as claimed in any of Claims 8 to 10, including an outer capillary surrounding the bundle.

13. Laser fibre apparatus comprising a combiner as claimed in any of Claims 9 to 12.

**Patentansprüche**

1. Verfahren zur Bildung eines Kombinators zum Kombinieren des Ausgangs von zwei oder mehr Faserlaserquellen, umfassend die Bereitstellung von zwei oder mehr Eingangsfasern (4a-4g), jeweils mit einem Kern (1) und einem Sockel (2); das Bündeln der Eingangsfasern; das starke Verjüngen der Eingangsfasern, so dass der verjüngte Faserkerndurchmesser geringer ist als der dem minimalen Modus-Felddurchmesser (MFD) für den besagten Faserkern entsprechende Kerndurchmesser, und das Verspleißen des Bündels von verjüngten Fasern mit einer Ausgangsfaser (18), wobei eine jede Faser im Bündel von Eingangsfasern von einem separaten Faserlaser stammt und alle davon mit dem Kern der einzelnen Ausgangsfaser (18) verbunden werden, **dadurch gekennzeichnet, dass** die Verjüngung auf adiabatische Weise erfolgt, ein einzelner Modus-Eingang im Kern beim Durchgang durch den verjüngten Bereich erhalten bleibt und der Verjüngungswinkel so beschaffen ist, dass Leistung in einem LP01-Kernmodus nicht in einen LP02-Sockelmodus überwechseln kann.

2. Verfahren nach Anspruch 1, wobei die Fasern vor dem Bündeln stark verjüngt werden.

3. Verfahren nach Anspruch 1, wobei die Eungangsfasern vor dem Verspleißen mit der Ausgangsfaser gebündelt und zusammen stark verjüngt werden.

4. Verfahren nach einem der vorhergehenden Ansprüche, wobei eine jede Eingangsfaser mindestens einen Kern (1) mit einem ersten Brechungsindex, einen Sockel (2) mit einem zweiten Brechungsindex, der niedriger ist als der erste Brechungsindex, und eine Mantelschicht (3) mit einem dritten Brechungsindex, der niedriger ist als der zweite Brechungsindex, aufweist.

5. Verfahren nach einem der vorhergehenden Ansprüche, umfassend das Bündeln von sieben Fasern (4a-4g) zum Eingangsbündel.

6. Verfahren nach einem der vorhergehenden Ansprüche, umfassend das Spalten des Bündels von Eingangsfasern bei einer Einbuchtung und das Verspleißen des gespalteten Bündels mit der Ausgangsfaser.

7. Verfahren nach einem der vorhergehenden Ansprüche, umfassend ein Bündel von Eingangsfasern und eine das Bündel radial umgebende Außenkapillare.

8. Ausgangskombinator zum Kombinieren des Ausgangs von zwei oder mehr Faserlasern zur Bildung eines einzelnen Ausgangs, umfassend ein Bündel von zwei oder mehr Eingangsfasern (4), jeweils mit einem Kern (1) und einem Sockel (2) und stark verjüngt, so dass der Kerndurchmesser geringer ist als der dem minimalen Modus-Felddurchmesser (MFD) für den besagten Faserkern entsprechende Kerndurchmesser, und eine mit dem Bündel von Eingangsfasern verspleißte Ausgangsfaser (18), wobei eine jede Faser im Bündel von Eingangsfasern von einem separaten Faserlaser stammt und alle davon mit dem Kern der einzelnen Ausgangsfaser (18) verbunden werden, **dadurch gekennzeichnet, dass** die Verjüngung auf adiabatische Weise erfolgt, ein einzelner Modus-Eingang im Kern beim Durchgang durch den verjüngten Bereich erhalten bleibt und der Verjüngungswinkel so beschaffen ist, dass Leistung in einem LP01-Kernmodus nicht in einen LP02-Sockelmodus überwechseln kann.

9. Ausgangskombinator nach Anspruch 8, wobei wobei eine jede Eingangsfaser mindestens einen Kern (1) mit einem ersten Brechungsindex, einen Sockel (2) mit einem zweiten Brechungsindex, der niedriger ist als der erste Brechungsindex, und eine Mantelschicht (3) mit einem dritten Brechungsindex, der niedriger ist als der zweite Brechungsindex, aufweist.

10. Ausgangskombinator nach Anspruch 8 oder 9, wobei die Eingangsfasern jeweilige Kern-, Sockel- und Manteldurchmesser von 9/105/125 Mikrometern und jeweilige numerische Aperturen von 0,09/0,2/0,5 haben und jeweils auf Durchmesser von 1,8/21/25 Mikrometern verjüngt werden.

11. Ausgangskombinator nach einem der Ansprüche 8 bis 10, wobei die Ausgangsfaser jeweilige Kern- und Manteldurchmesser von 90 und 400 Mikrometern und numerische Aperturen von 0,11 und 0,45 hat.

**12.** Ausgangskombinator nach einem der Ansprüche 8 bis 10, umfassend eine das Bündel umgebende Außenkapillare.

**13.** Laserfasergerät, umfassend einen Kombinator nach einem der Ansprüche 9 bis 12.

**Revendications**

**1.** Procédé de formation d'un combinateur pour combiner la sortie venant de deux sources de laser à fibre ou plus, comprenant la prévision de deux fibres d'entrée ou plus (4a-4g), ayant chacune un coeur intérieur (1) et un coeur extérieur (2) ; la mise en faisceau des fibres d'entrée ; le fort effilement des fibres d'entrée de manière à ce que le diamètre du coeur intérieur de la fibre effilée soit moins que le diamètre du coeur correspondant à la valeur du diamètre du champ de mode minimum (MFD) pour ce coeur intérieur de fibre, et l'épissage du faisceau de fibres effilées en une fibre de sortie (18), chaque fibre dans le faisceau de fibres d'entrée venant d'un laser à fibre séparé et toutes ces fibres étant connectées au coeur de la fibre de sortie unique (18) ; **caractérisé en ce que** l'effilement est exécuté d'une manière adiabatique, **en ce qu'**une entrée monomode dans le coeur intérieur est préservée tandis qu'elle passe à travers la région effilée, et **en ce que** l'angle d'effilement est tel que la puissance dans un mode de coeur intérieur LP01 est empêchée d'être transférée à un mode de coeur extérieur LP02.

**2.** Procédé selon la revendication 1, dans lequel les fibres sont fortement effilées avant d'être mises en faisceau.

**3.** Procédé selon la revendication 1, dans lequel les fibres d'entrée sont mises en faisceau et fortement effilées collectivement avant d'être épissées à la fibre de sortie.

**4.** Procédé selon l'une quelconque des revendications précédentes, dans lequel chaque fibre d'entrée comprend au moins un coeur intérieur (1) ayant un premier indice de réfraction, un coeur extérieur (2) ayant un deuxième indice de réfraction plus bas que le premier indice de réfraction et une couche de gaine (3) ayant un troisième indice de réfraction plus bas que le deuxième indice de réfraction.

**5.** Procédé selon l'une quelconque des revendications précédentes, comprenant la mise en faisceau de sept fibres (4a-4g) pour former le faisceau d'entrée.

**6.** Procédé selon l'une quelconque des revendications précédentes, comprenant le clivage du faisceau de fibres d'entrée au niveau d'un étranglement et l'épissage du faisceau clivé à la fibre de sortie.

**7.** Procédé selon l'une quelconque des revendications précédentes, comprenant un faisceau de fibres d'entrée et un capillaire extérieur entourant radialement le faisceau.

**8.** Combinateur de sortie pour combiner la sortie venant de deux sources de laser à fibre ou plus en une seule sortie, comprenant un faisceau de deux fibres d'entrée ou plus (4), chacune ayant un coeur intérieur (1) et un coeur extérieur (2) et étant fortement effilées de manière à ce que le diamètre du coeur intérieur soit moins que le diamètre du coeur correspondant à la valeur du diamètre du champ de mode minimum (MFD) pour cette fibre, et une fibre de sortie (18) épissée au faisceau de fibres d'entrée, chaque fibre dans le faisceau de fibres d'entrée venant d'un laser à fibre séparé et toutes ces fibres étant connectées au coeur de la fibre de sortie unique (18) ; **caractérisé en ce que** l'effilement est exécuté d'une manière adiabatique, **en ce qu'**une entrée monomode dans le coeur intérieur est préservée tandis qu'elle passe à travers une région effilée, et **en ce que** l'angle d'effilement est tel que la puissance dans un mode de coeur intérieur LP01 est empêchée d'être transférée à un mode de coeur extérieur LP02.

**9.** Combinateur de sortie selon la revendication 8, dans lequel chaque fibre d'entrée comprend au moins un coeur intérieur (1) ayant un premier indice de réfraction, un coeur extérieur (2) ayant un deuxième indice de réfraction plus bas que le premier indice de réfraction et une couche de gaine (3) ayant un troisième indice de réfraction plus bas que le deuxième indice de réfraction.

**10.** Combinateur de sortie selon la revendication 8 ou la revendication 9, dans lequel les fibres d'entrée ont des diamètres respectifs de coeur intérieur, de coeur extérieur et de gaine de 9/105/125 micromètres et des ouvertures numériques respectives de 0,09/0,2/0,5 et sont effilées jusqu'à des diamètres respectifs de 1,8/21/25 micromètres.

**11.** Combinateur de sortie selon l'une quelconque des revendications 8 à 10, dans lequel la fibre de sortie a des diamètres respectifs de coeur et de gaine de 90 et 400 micromètres et des ouvertures numériques de 0,11 et 0,45.

**12.** Combinateur de sortie selon l'une quelconque des revendications 8 à 10, comprenant un capillaire extérieur entourant le faisceau.

**13.** Appareil à fibres laser comprenant un combinateur selon l'une quelconque des revendications 9 à 12.

FIG. 1

FIG. 2

$D_0$ ⊥ 4

Fibre, initial
Dia. =$D_0$

## FIG. 3

6

5

Tension
7

6

Apply
localised
heat and
tension

## FIG. 4

W

$D_1$

7

Taper ratio + $D_1$ / $D_0$

By varying
tension, waist
is produced,
diameter = $D_1$

## FIG. 5

FIG. 6

FIG. 7

FIG. 8

FIG. 9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 1988412 A2

- US 6324326 B